Europäisches Patentamt

European Patent Office

Office européen des brevets

(19)

(11) Veröffentlichungsnummer: **0 176 935 B1**

(12) **EUROPÄISCHE PATENTSCHRIFT**

(45) Veröffentlichungstag der Patentschrift: 28.08.91

(51) Int. Cl.⁵: **G02B 5/08, B60R 1/08**

(21) Anmeldenummer: 85112110.3

(22) Anmeldetag: 24.09.85

(54) **Rückblickspiegel für Fahrzeuge, insbesondere Kraftfahrzeuge, mit rückseitiger Beschichtung.**

(30) Priorität: 01.10.84 DE 3436011

(43) Veröffentlichungstag der Anmeldung:
09.04.86 Patentblatt 86/15

(45) Bekanntmachung des Hinweises auf die
Patenterteilung:
28.08.91 Patentblatt 91/35

(84) Benannte Vertragsstaaten:
**AT BE CH DE FR GB IT LI LU NL SE**

(56) Entgegenhaltungen:
**DE-A- 1 013 089        DE-A- 1 036 672
DE-A- 2 449 763        DE-A- 3 005 621
DE-A- 3 205 055        DE-C- 716 153
US-A- 2 590 906**

**PATENT ABSTRACTS OF JAPAN, Band 6, Nr.
248 (P-160)[1126], 7. Dezember 1982; & JP-
A-57 144 504**

(73) Patentinhaber: **FLACHGLAS AKTIENGESELL-
SCHAFT
Otto-Seeling-Promenade 10-14
W-8510 Fürth(DE)**

(72) Erfinder: **Groth, Rolf,Dr.Dipl.-Phys.
Holzstrasse 218
W-4630 Bochum(DE)**

(74) Vertreter: **Goddar, Heinz J., Dr. et al
FORRESTER & BOEHMERT Widenmayerstrasse 4/I
W-8000 München 22(DE)**

Rank Xerox (UK) Business Services

## Beschreibung

Die Erfindung betrifft einen Rückblickspiegel für Fahrzeuge, insbesondere Kraftfahrzeuge, oder dergleichen, mit einem transparenten Schichtträger, Vorzugsweise aus Natron-Silikatglas bestehend, und einer rückseitigen Beschichtung, welche eine hochreflektierende Spiegelschicht aus einem Metall oder Aluminium und eine zwischen dem Schichtträger und der Spiegelschicht angeordnete Interferenzschicht aus dielektrischem Material aufweist.

Als rückseitige Beschichtung für Auto-Spiegel lassen sich bekanntlich Schichten der hochreflektierenden Metalle Silber und Aluminium einsetzen, wobei eine derartige rückseitige Beschichtung generell gegenüber einem vorderseitig beschichteten Rückblickspiegel den Vorteil hat, daß die Beschichtung durch die Spiegeleinfassung gegen direkte atmosphärische Einwirkung, insbesondere Verschmutzung, geschützt ist. Mittels der vorgenannten hochreflektierenden Metalle erhält man Rückspiegel mit Reflexionswerten im sichtbaren Spektralbereich von mehr als 85%.

Aus "Selective Optical Surfaces for Solar Energy Converters", von M.M. Koltun, New York, 1961, Seite 39, ist ein Spiegel des vorstehend beschriebenen Schichtaufbaus bekannt, bei dem zur weiteren Erhöhung des Reflexionsvermögens auf über 90 % zwischen dem transparenten Schichtträger, im folgenden u.a. auch kurz als Glasträger bezeichnet, und der dort aus Aluminium bestehenden Metall-Reflexionsschicht eine reflexerhöhende, ein- oder zweilagige, dielektrische Interferenzschicht angeordnet ist.

Derartige Spiegel führen jedoch aufgrund des bei Tageslicht durchaus erwünschten hohen (und im wesentlichen wellenlängenunabhängigen) Reflexionsgrades bei Nachtfahrten zur Blendung des Fahrers durch die Scheinwerfer nachfolgender Fahrzeuge.

Andererseits sind blendfreie Rückblickspiegel bekannt (DE-AS 10 36 672; DE-AS 24 49 763), bei denen auf der Vorderseite des vorzugsweise aus Glas bestehenden transparenten Schichtträgers ein Belag in Form einer nichtmetallischen, vorzugsweise metalloxidischen Interferenzbeschichtung aufgebracht und die Rückseite gegebenenfalls mit einem dunklen, absorbierenden Überzug versehen ist. Die Interferenzbeschichtung kann dabei beispielsweise aus drei Teilschichten in der Reihenfolge hochbrechende Schicht - niedrigbrechende Schicht - hochbrechende Schicht bestehen. Werden die Dicken dieser Teilschichten als $\lambda$/4-Schichten auf das kurzwellige sichtbare Spektralgebiet eingestellt, so weisen derartige Spiegel im blauen Spektralbereich im Vergleich zum langwelligen Gelb-Rot-Bereich ein höheres Reflexionsvermögen auf. Durch einen solchermaßen selektiv reflektierenden Blaubelag wird bei Tageslicht noch ein ausreichend helles Bild erzeugt, während bei Nachtfahrten der Blendeffekt durch die Scheinwerfer nachfolgender Fahrzeuge mit ihrem hohen Strahlungsanteil im langwelligen sichtbaren Gebiet reduziert wird.

Ein Nachteil derartiger blendfreier Rückblickspiegel mit Vorderseiten-Interferenzbeschichtung besteht aber darin, daß die Beschichtung unmittelbar der Außenatmosphäre ausgesetzt ist. Insbesondere kann es bei Entfernung von Verschmutzungen von der beschichteten Vorderseite des Pückblickspiegels leicht zu Verkratzungen der Beschichtung kommen, welche die Funktionsweise eines derartigen Rückblickspiegels in besonderem Maße stören, weil Verkratzungen an einer hochreflektierenden Schicht wesentlich stärkere optische Störungen hervorrufen als beispielsweise an der Grenzfläche einer normalen Glasscheibe zu Luft mit einem Reflexionsvermögen von nur 4 %.

Der weg, durch rückseitige Anordnung der Beschichtung auf dem Schichtträger den notwendigen Schutz der Beschichtung zu erreichen, kann bei den vorgenannten nicht-metallischen Interferenzbeschichtungen nicht beschritten werden; sie sind transparent und müßten auf ihrer Rückseite durch einen dunklen Überzug abgedeckt werden. Hierdurch würde jedoch die für die Wirkung des Interferenzfilters wichtige äußere Grenzfläche Interferenzbeschichtung/Luft ausgeschaltet, wodurch die Funktion des Filters störend beeinträchtigt würde.

Versucht man andererseits bei einem gattungsgemäßen Spiegel mit rückseitiger Reflexionsschicht aus Aluminium oder aber auch Silber sowie zwischen Schichtträger und Reflexionsschicht angeordneter dielektrischer Interferenzschicht die vorstehend beschriebene Selektivität in der Reflexion dadurch zu erzielen, daß die Interferenzschicht als auf das langwellige, sichtbare Gebiet angepaßte hochbrechende Entspiegelungsschicht, beispielsweise aus $TiO_2$, $CeO_2$, $Ta_2O_5$, $Bi_2O_3$ und/oder ZnS, ausgebildet wird, so führt dies zu einem allenfalls schwach blaustichigen Spiegel ohne nennenswerte Blendschutzwirkung.

Der Erfindung liegt daher die Aufgabe zugrunde, einen blendfreien Rückblickspiegel für Fahrzeuge, insbesondere Kraftfahrzeuge, zu schaffen, der unter Vermeidung der Nachteile der bekannten Rückblickspiegel mit Vorderseiten-Interferenzbeschichtung einen Lichtreflexionsgrad im Bereich zwischen dem nach den Richtlinien der Europäischen Gemeinschaft erforderlichen Mindest-Lichtreflexionsgrad von 0,4 und etwa 0,6 aufweist.

Diese Aufgabe wird erfindungsgemäß dadurch gelöst, daß die dielektrische Interferenzschicht in ihrer Dicke als Entspiegelungsschicht für den langwelligen sichtbaren Spektralbereich ausgebildet ist;

und daß zwischen dem transparenten Schichtträger und der dielektrischen Interferenzschicht eine Zusatzschicht aus einem Metall oder einer Metallegierung solcher Dicke angeordnet ist, daß die Lichtdurchlässigkeit des aus dem transparenten Schichtträger und der Zusatzschicht bestehenden Verbundes um 10 bis 55 % niedriger ist als die des transparenten Schichtträgers allein.

Eine besondere Ausführungsform der Erfindung sieht vor, daß die Lichtdurchlässigkeit des aus dem transparenten Schichtträger und der Zusatzschicht bestehenden Verbundes um 15 bis 45 % niedriger ist als die des transparenten Schichtträgers allein.

Erfindungsgemäß kann vorgesehen sein, daß die Zusatzschicht aus Chrom, Nickel, Eisen, Titan, Legierungen dieser Metalle oder aus einer Legierung der Metalle Chrom, Aluminium und Eisen besteht.

Alternativ hierzu schlägt die Erfindung auch vor, daß die Zusatzschicht aus Silber besteht.

Ferner kann erfindungsgemäß vorgesehen sein, daß die Zusatzschicht aus Aluminium besteht.

Mit der erfindungsgemäß verwendeten Zusatzschicht gelingt es überraschenderweise, den für blendfreies Sehen erwünschten selektiven Spektralverlauf mit niedrigerem Reflexionsgrad im langwelligen sichtbaren Spektralbereich im Vergleich zum kurzwelligen sichtbaren Bereich in Verbindung mit einem mittleren Lichtreflexionsgrad eines solchen Spiegels zu erhalten.

Erfindungswesentlich ist dabei, anders als bei bekannten Interferenzfiltern des Aufbaus Metall/ Dielektrikum/ Metall, wie sie beispielsweise in der DE-PS 716 153 beschrieben werden, das Zusammenwirken der hohen Reflexionsamplitude an der Grenzfläche zwischen der dielektrischen Interferenzschicht und der rückseitigen, hochreflektierenden Spiegelschicht mit der vorderseitigen schwächeren Reflexionsamplitude der Zusatzschicht über Interferenz. Durch diesen Schichtaufbau gelingt es überraschenderweise, den erwünschten selektiven Spektralverlauf des erfindungsgemäßen Rückblickspiegels mit kontinuierlich vom blauen zum langwelligen sichtbaren Bereich abnehmendem Reflexionsgrad zu erreichen.

Die Beschichtung des transparenten Schichtträgers zur Herstellung der erfindungsgemäßen Beschichtung erfolgt in aller Regel insgesamt durch Vakuum-Beschichtung. Vorzugsweise können die Metall- bzw. Metallegierungsschichten dabei durch Verdampfen aus widerstandsgeheizten Verdampfervorrichtungen oder auch durch Elektronenstrahlverdampfung aufgebracht werden. Ferner eignen sich Kathodenzerstäubung als Gleichstrom-, Niederfrequenz- und Hochfrequenzzerstäubung sowie das besonders wirtschaftliche Verfahren der MAGNETRON-Kathodenzerstäubung. Die dielektrischen Interferenzschichten können entweder durch direktes Verdampfen oder Kathodenzerstäubung der entsprechenden, dielektrischen Materialien erfolgen. Auch die bekannten Verfahren der reaktiven Verdampfung bzw. der reaktiven Kathodenzerstäubung der entsprechenden Metalle lassen sich einsetzen.

Neben der Vakuum-Abscheidung können ferner auch andere Abscheide-Verfahren, wie z. B. naßchemische Verfahren durch Abscheidung aus geeigneten Ausgangslösungen verwendet werden.

Als Schichtträger können neben Silikatglas auch andere transparente Materialien, vorzugsweise aus Kunststoff, wie z. B. Polymethylmethacrylate, Polyester, Polycarbonate und dergleichen, eingesetzt werden.

Innerhalb des Erfindungsgedankens kann ferner auch vorgesehen sein, zur Verbesserung der Korrosionsbeständigkeit des erfindungsgemäßen Rückblickspiegels, auf die Beschichtung zusätzlich eine Schutzschicht aufzubringen. Das kann z. B. eine weitere Metall-, Metallegierungsschicht oder eine Metalloxidschicht sein, welche im Vakuum-Verfahren gleich anschließend nach Aufbringen der eigentlichen selektiven Beschichtung aufgebracht wird, oder auch ein Lacküberzug. Auch eine Kombination beider Maßnahmen ist vorgesehen.

Die einzustellende Lichtschwächung durch die Zusatzschicht im erfindungsgemäß angegebenen Bereich hängt einmal vom Lichtreflexionsgrad ab, der für den blendfreien Rückblickspiegel erhalten werden soll. Die erforderliche Lichtschwächung durch die Zusatzschicht ist dabei innerhalb des angegebenen Bereiches umso größer, je niedriger der Lichtreflexionsgrad gewählt wird. Außerdem ergibt sich auch eine gewisse Abhängigkeit, je nach dem, ob Silber oder Aluminium für die rückseitige Spiegelschicht verwendet wird. Für Silber werden etwas höhere Lichtabschwächungswerte für dasselbe Lichtreflexionsniveau benötigt als bei Aluminium.

Für die dielektrische Interferenzschicht haben sich eine Vielzahl von dielektrischen Materialien als geeignet erwiesen, sofern sie nur im sichtbaren Gebiet im wesentlichen absorptionsfrei sind und damit durch sie nicht eine zusätzliche unerwünschte Lichtschwächung hervorgerufen wird. Geeignet sind nicht nur dielektrische Schichten mit einem hohen Brechungsindex > 1,7, wie sie zur wirksamen Entspiegelung von hochreflektierenden Metall-Einfachschichten auf deren Luftseite verwendet werden, wie beispielsweise $TiO_2$, $ZnS$, $CeO_2$, $Bi_2O_3$ oder $Ta_2O_5$, sondern auch Schichten mit niedrigerem Brechungsindex, wie z. B. Siliziumdioxid und Magnesiumfluorid.

Bei dem erfindungsgemäß vorgesehenen 3-Schicht-Aufbau ist es offensichtlich ausreichend, daß die dielektrische Interferenzschicht eine Aufgabe als Abstandsschicht zwischen den beiden Metallschichten, nämlich der Reflexionsschicht und der Zusatzschicht, erfüllt, wobei ihre Dicke der einer Viertelwellenlängenschicht für das langwellige sichtbare Gebiet entspricht.

Die erfindungsgemäß bevorzugt verwendeten Materialien für die Zusatzschicht, nämlich Chrom, Nickel, Eisen, Titan, Legierungen dieser Metalle oder aus einer Legierung der Metalle Chrom, Aluminium und Eisen, zeichnen sich bei Aufbringung im Vakuum durch eine gute Haftung zum Glassubstrat und der sich anschließenden dielektrischen Interferenzschicht aus und vermitteln damit der Gesamtschicht eine gute

Abriebfestigkeit. Geeignet sind jedoch auch Schichten anderer Metalle und Metallegierungen, beispielsweise auch Schichten aus den für die rückseitige Verspiegelung verwendeten Metallen Silber oder Aluminium.

Die Verwendung gleichen Materials für die Spiegel- sowie für die Zusatzschicht ermöglicht dadurch, daß jeweils die gleichen Verdampfungseinrichtungen bzw. Targets für die Beschichtung eingesetzt werden können, eine besonders wirtschaftliche Aufbringung des Schichtsystems.

Weitere Merkmale und Vorteile der Erfindung ergeben sich aus den Ansprüchen und aus der nachfolgenden Beschreibung, in der Ausführungsbeispiele anhand der schematischen Zeichnung im einzelnen erläutert sind. Dabei zeigt:

Fig. 1   ein erstes Ausführungsbeispiel eines Rückblickspiegels nach der Erfindung im schematischen Schnitt senkrecht zur Ebene des transparenten Schichtträgers;

Fig. 2   ein zweites Ausführungsbeispiel eines Rückblickspiegels nach der Erfindung in der Fig. 1 entsprechendem Schnitt; und

Fig. 3   eine graphische Darstellung des Reflexionsgrades erfindungsgemäßer Rückblickspiegel.

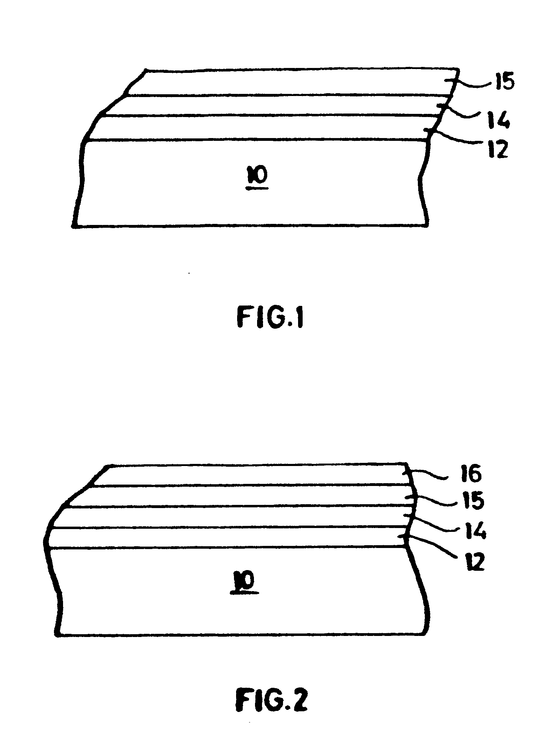

Fig. 1 zeigt ein Ausführungsbeispiel eines Rückblickspiegels nach der Erfindung, bei dem auf einem transparenten Schichtträger 10, aus Natron-Silikatglas bestehend, eine Zusatzschicht 12 aus Chrom, daran anschließend eine dielektrische Entspiegelungsschicht 14 aus ZnS und im Anschluß hieran eine Reflexionsschicht 15 aus Silber angeordnet sind.

Bei dem Ausführungsbeispiel von Fig. 2 ist im Anschluß an die Reflexionsschicht 15 noch eine Schutzschicht 16, in diesem Fall ein Lacküberzug, angeordnet.

Die Herstellung des erfindungsgemäßen Rückblickspiegels kann in der in den nachfolgenden Beispielen beschriebenen Weise erfolgen:

**Beispiel 1:**

Auf eine Klarglasscheibe 10 von 3 mm Dicke wurde in einer Hochvakuum-Bedampfungsanlage zunächst eine Chromnickelschicht 12 der Zusammensetzung 80 Gew.-% Nickel und 20 Gew.-% Chrom aufgedampft. Der Beschichtungsprozeß wurde beendet, als die Lichtdurchlässigkeit der Scheibe, die vor Beginn der Bedampfung 91 % betrug, auf 60 % abgesunken war. Dann wurde eine Zinksulfid-Schicht 14 in einer Dicke von 65 nm aufgedampft. Anschließend erfolgte die Beschichtung mit Silber (Reflexionsschicht 15) in einer solchen Dicke, daß die Lichttransmission der beschichteten Scheibe unterhalb von 1 % lag.

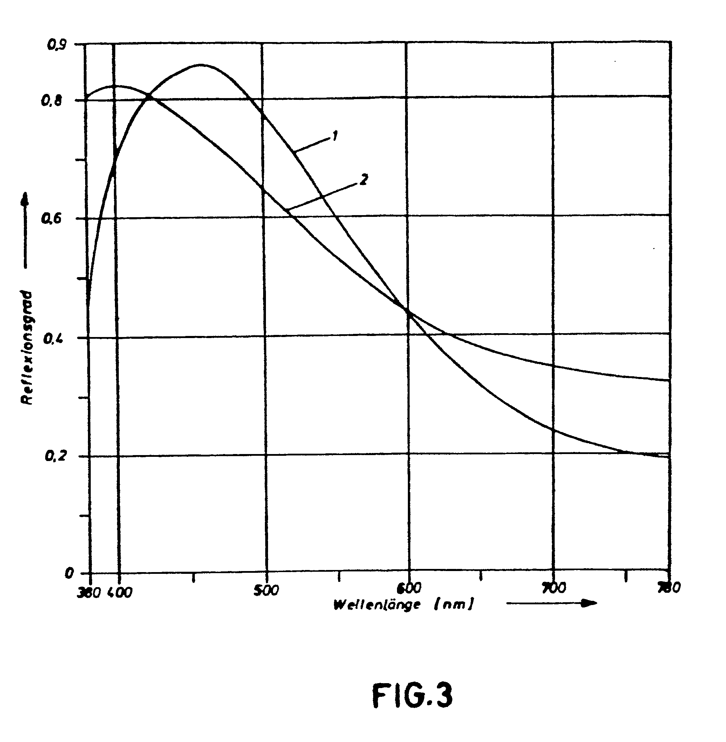

Die Messung des spektralen Reflexionsgrades bei Strahlungseinfall von der Glasseite der beschichteten Scheibe ergab den in Fig. 3 als Kurve 1 wiedergegeben Verlauf. Es ergibt sich der für blendfreies Sehen erwünschte selektive Spektralverlauf mit Abnahme des Reflexionsgrades im langwelligen Sichtbaren im Vergleich zum kurzwelligen sichtbaren Spektralbereich. Dementsprechend weist die Scheibe bei Betrachtung von der Glasseite einen deutlichen Blaustich auf. Das Helligkeitsniveau der Scheibe, welche einen Lichtreflexionsgrad von 0,6 hat, liegt an der oberen Grenze des erwünschten Bereichs. Bei Lichtreflexionsgraden zwischen 0,5 und 0,6 sind insbesondere auch die Doppelbildeffekte, die durch die etwas seitlich versetzte zusätzliche Reflexion an der Außenseite des Spiegels hervorgerufen werden, nicht mehr von Bedeutung.

**Beispiel 2:**

Auf eine Klarglasscheibe 10 von 3 mm wurden nacheinander eine Chromschicht 12, eine Titandioxidschicht 14 und eine Aluminiumschicht 15 aufgedampft. Die Chromschicht 12 hatte dabei eine solche Dicke, daß durch sie die Lichtdurchlässigkeit der unbeschichteten Scheibe von 91 % auf 76 % erniedrigt wurde. Die Dicke der Titandioxid-Schicht 14 betrug 64 nm. Durch die Aluminiumschicht 15 wurde die Lichtdurchlässigkeit auf einen Wert <1 % erniedrigt. Die beschichtete Scheibe wies bei Betrachtung von der Glasseite wie die Scheibe in Beispiel 1 ebenfalls einen deutlichen Blaustich auf. Der spektrale Reflexionsverlauf der Scheibe, gemessen von der Glasseite, ist als Kurve 2 in Fig. 3 wiedergegeben und zeigt den erwünschten selektiven Reflexionsverlauf mit Abnahme des Reflexionsgrades bei größeren Wellenlängen des sichtbaren Spektralbereiches. Auch das Helligkeitsniveau dieser Scheibe mit einem Lichtreflexionsgrad von 0,54 liegt im erwünschten mittleren Bereich.

**Patentansprüche**

1. Rückblickspiegel für Fahrzeuge, insbesondere Kraftfahrzeuge oder dergleichen, mit einem transparenten Schichtträger (10), vorzugsweise aus Natron-Silikatglas bestehend, und einer rückseitigen Beschichtung (12,14,15), welche eine hochreflektierende Spiegelschicht (15) aus einem Metall oder einer Metallegierung, insbesondere Silber oder Aluminium, und eine zwischen dem Schichtträger und der Spiegelschicht angeordnete Interferenzschicht (14) aus dielektrischen Material aufweist, dadurch gekennzeichnet, daß die dielektrische Interferenzschicht (14) in ihrer Dicke als Entspiegelungsschicht für den langwelligen sichtbaren Spektralbereich ausgebildet ist; und daß zwischen dem transparenten Schichtträger (10) und der dielektrischen Interferenzschicht (14) eine Zusatzschicht (12) aus einem Metall oder einer Metallegierung solcher Dicke angeordnet ist, daß die Lichtdurchlässigkeit des aus dem transparenten Schichtträger (10) und der Zusatzschicht (12) bestehenden Verbundes um 10 bis 55 % niedriger ist als die des transparenten Schichtträgers (10) allein.

2. Rückblickspiegel nach Anspruch 1, dadurch gekennzeichnet, daß die Lichtdurchlässigkeit des aus dem transparenten Schichtträger (10) und der Zusatzschicht (12) bestehenden Verbundes um 15 bis 45 % niedriger ist als die des transparenten Schichtträgers (10) allein.

3. Rückblickspiegel nach Anspruch 1 oder 2, dadurch gekennzeichnet, daß die Zusatzschicht (12) aus Chrom, Nickel, Eisen, Titan, Legierungen dieser Metalle oder aus einer Legierung der Metalle Chrom, Aluminium und Eisen besteht.

4. Rückblickspiegel nach Anspruch 1 oder 2, dadurch gekennzeichnet, daß die Zusatzschicht (12) aus Silber besteht.

5. Rückblickspiegel nach Anspruch 1 oder 2, dadurch gekennzeichnet, daß die Zusatzschicht (12) aus Aluminium besteht.

6. Rückblickspiegel nach einem der vorangehenden Ansprüche, dadurch gekennzeichnet, daß im Anschluß an die Spiegelschicht (15) eine Schutzschicht (16) angeordnet ist.

7. Rückblickspiegel nach einem der vorangehenden Ansprüche, dadurch gekennzeichnet, daß zumindest eine der Schichten (12, 14, 15, 16) der rückseitigen Beschichtung durch Vakuum-Beschichtung aufgebracht ist.

**Claims**

1. A rear-view mirror for vehicles, more particularly motor vehicles or the like, the mirror having a transparent coating support or substrate (10) which is preferably of soda silicate glass, and a rear coating (12, 14, 15) comprising a highly reflective mirror layer (15) of a metal or metal alloy, more particularly silver or aluminium, and a dielectric interference layer (14) between the substrate and the reflecting layer, characterised in that the dielectric interference layer (14) is devised in its thickness as a non-reflecting coating for the visible long-wave range of the spectrum, and an additional layer (12) of a metal or a metal alloy is disposed between the transparent substrate (10) and the dielectric interference layer (14) and is of a thickness such that the light transmittance of the composite comprising the transparent substrate (10) and the additional layer (12) is from 10 to 55% less than that of the transparent substrate (10) alone.

2. A rear-view mirror according to claim 1, characterised in that the light transmittance of the composite comprising the transparent substrate (10) and the additional layer (12) is from 15 to 45% less than that of the transparent substrate (10) alone.

3. A rear-view mirror according to claim 1 or 2, characterised in that the additional layer (12) consists of chromium, nickel, iron, titanium, alloys of these metals or an alloy of the metals chromium, aluminium and iron.

4. A rear-view mirror according to claims 1 or 2, characterised in that the additional layer (12) consists of silver.

5. A rear-view mirror according to claim 1 or 2, characterised in that the additional layer (12) consists of aluminium.

6. A rear-view mirror according to any of the previous claims, characterised in that the reflecting layer (15) is followed by a protective layer (16).

7. A rear-view mirror according to any of the previous claims, characterised in that at least one of the layers (12, 14, 15, 18) of the rear coating is applied by vacuum coating.

**Revendications**

1. Miroir rétroviseur pour véhicules, notamment véhicules automobiles ou similaires, comportant un support de couches transparent (10), constitué de préférence de verre au silicate de sodium, et un revêtement côté arrière (12, 14, 15) comprenant une couche de miroir hautement réfléchissante (15) en métal ou en alliage métallique, notamment en argent ou en aluminium, ainsi qu'une couche d'interférence (14) en matériau diélectrique disposée entre le support de couches et la couche de miroir, caractérisé en ce que l'épaisseur de la couche d'interférence diélectrique (14) est déterminée pour que cette couche constitue une couche antireflet pour le domaine spectral visible de grande longueur d'onde, et en ce qu'entre le support de couches transparent (10) et la couche d'interférence diélectrique (14) est disposée une couche supplémentaire (12) en métal ou en alliage métallique ayant une épaisseur telle que la transparence de l'ensemble constitué du support de couches transparent (10) et de la couche supplémentaire (12) soit inférieure de 10 à 55 % à celle du support de couches transparent (10) seul.

2. Miroir rétroviseur selon la revendication 1, caractérisé en ce que la transparence de l'ensemble constitué du support de couches transparent (10) et de la couche supplémentaire (12) est inférieure de 15 à 45% à celle du support de couches transparent (10) seul.

3. Miroir rétroviseur selon la revendication 1 ou 2, caractérisé en ce que la couche supplémentaire (12) est constituée de chrome, de nickel, de fer, de titane, d'alliages de ces métaux ou d'un alliage des métaux suivants : chrome, aluminium et fer.

4. Miroir rétroviseur selon la revendication 1 ou 2, caractérisé en ce que la couche supplémentaire (12) est constituée d'argent.

5. Miroir rétroviseur selon la revendication 1 ou 2, caractérisé en ce que la couche supplémentaire (12) est constituée d'aluminium.

6. Miroir rétroviseur selon l'une des revendications précédentes, caractérisé en ce qu'une couche de protection (16) est disposée sur la couche de miroir (15).

7. Miroir rétroviseur selon l'une des revendications précédentes, caractérisé en ce qu'au moins l'une des couches (12, 14, 15, 16) du revêtement côté arrière est déposée par revêtement sous vide.

**FIG.1**

**FIG.2**

**FIG.3**